# EUROPÄISCHE PATENTSCHRIFT

(11) **EP 0 649 346 B1**
(45) Veröffentlichungstag und Bekanntmachung des Hinweises auf die Patenterteilung: **11.11.1998**
(21) Anmeldenummer: 93912862.5
(22) Anmeldetag: 03.06.1993
(51) Int. Cl.: B03B 11/00, B03B 5/60, B03D 1/14, B01D 21/24

(54) **VORRICHTUNG ZUR ZENTRISCHEN BESCHICKUNG VON RUNDBECKEN**
DEVICE FOR CENTRICALLY CHARGING CIRCULAR TANKS
DISPOSITIF POUR LE CHARGEMENT CENTRAL DE BASSINS CIRCULAIRES

(30) Priorität: 21.07.1992 DE 4224047
(43) Veröffentlichungstag der Anmeldung: 26.04.1995
(73) Patentinhaber: Felder, Anton, D-81541 München (DE)
(72) Erfinder: FELDER, Anton, D-8000 München 90 (DE); VALENTIN, Franz, D-8000 München 2 (DE)
(74) Vertreter: Lewald, Dietrich, Dipl.-Ing.
(86) Internationale Anmeldenummer: EP9301390
(87) Internationale Veröffentlichungsnummer: WO9402251

(56) Entgegenhaltungen:
- DE-A- 3 529 760
- DE-A- 3 818 624
- DE-B- 1 179 521
- DE-U- 9 112 947
- GB-A- 2 108 858

## Beschreibung

Die Erfindung betrifft eine Vorrichtung zur zentrischen Beschickung von Becken, wie Rundsandfängen, Sandklassierern oder Absetzbecken in Rundbauweise, nach dem Oberbegriff des Anspruchs 1 (siehe DE-U-9 112 947).

Gegenstand der Erfindung ist auch ein Verfahren zur Beschickung von Becken, wie Rundsandfängen und Sandklassierern und Absetzbecken in Rundbauweise, nach dem Oberbegriff des Anspruchs 12. Schließlich ist Gegenstand der Erfindung auch die Anwendung der Vorrichtung zur Beschickung von Rundsandfängen und Sandklassierern sowie Absetzbecken in Rundbauweise.

Aus Gründen der Betriebssicherheit ist bei vielen Abwasser- und Schlammbehandlungseinheiten einer Kläranlage zumeist die Trennung der im Abwasser mitgespülten Sande und anderer mineralischer Stoffe von den faulfähigen, organischen Stoffen erforderlich. Die für die Entsandung des Abwassers gebräuchlichen Einrichtungen werden je nach Konstruktionsart und Betriebsweise als Tief-, Flach-, Rund- und belüftete Sandfänge bezeichnet. Bei den bisher bekannten Rundsandfängen und Sandklassierern in Rundbauweise wird das Abwasser einem kreisförmigen Trichterbecken tangential zugeführt. Nach Durchfließen eines Zentrierwinkels von über 180° gelangt das Abwasser in den Auslauf. Der große Nachteil von Rundsandfängen und Sandklassierern in Rundbauweise konventioneller Bauart ist jedoch, daß aufgrund der tangentialen Einleitung das vorhandene Beckenvolumen (effektiv durchflossener Bereich) nicht optimal genutzt wird und somit deren hydraulischer Wirkungsgrad lediglich etwa 50% beträgt.

Das Arbeitsprinzip konventioneller Rundsandfänge beruht auf der Tatsache, daß in Krümmungen das Geschiebe sich im Innern der Kurve bewegt. Durch die erzwungene Kreisbewegung wird infolge der Zentrifugalkraft im Rundsandfang ein Wasserspiegelanstieg von der Rotationsachse nach außen bewirkt. Unter dem Einfluß des Überdruckes in der Randzone wird der Durchflußströmung somit eine kreisförmige Bewegung überlagert, die an der Sohle gegen das Zentrum gerichtet ist. Daraus resultiert eine schraubenförmige Durchströmung des Beckens. Durch die radiale Querströmung, die an der Sohle infolge der dort herabgesetzten Tangentialgeschwindigkeit des Abwassers besonders stark ist, wird der zur Sohle abgesunkene Sand in den trichterförmigen Sammelraum transportiert, in dessen Achse zumeist ein zylindrischer Pumpensumpf mit Mammutpumpen angeordnet ist.

Es ist Aufgabe der Erfindung, eine konstruktiv vereinfachte Vorrichtung zur zentrischen Beschickung von Becken, wie Rundsandfängen und Sandklassierern sowie Absetzbecken in Rundbauweise derart zu schaffen, daß eine Steigerung des hydraulischen Wirkungsgrades bei gleicher Zuflußmenge und gleichem Absetzvolumen von 50% auf 90% erzielt wird.

Weiterhin ist es Aufgabe der Erfindung, ein solches Verfahren zur zentrischen Beschickung anzugeben, bei dem der Wirkungsgrad verbessert wird.

Erreicht wird dies bei einer Vorrichtung zur zentrischen Beschickung von Becken, wie Rundsandbecken sowie Sandklassierern und Absetzbecken in Rundbauweise, mit einer mit dem Zulauf verbundenen Drallkammer, die mit einem vertikalen Fallrohr in Verbindung steht, wobei an das Fallrohr sich nahtlos eine trompetenförmige Aufweitung anschließt, wobei die Drallströmung derart ausgenutzt wird, daß an der trompetenförmigen Aufweitung der Coanda-Effekt aktiviert wird, welcher seinerseits eine Umlenkung des aus dem vertikalen Fallrohr austretenden drallbehafteten Flüssigkeitsstroms zumindest in die Horizontale oder vertikal nach oben als auch eine radial symmetrische Abströmung im Becken bewirkt, dadurch gekennzeichnet, daß auf eine im Fallrohr oder in der trompetenförmigen Ausweitung eingesetzte Steuerscheibe verzichtet wird und daß insbesondere ein mittig im Fallrohr über seinen Rohrumfang vorzugsweise runde Öffnungen aufweisendes Leitrohr angeordnet ist, das oben zur Atmosphäre hin offen ist.

Es wird nicht verkannt, daß an sich Verfahren bekannt sind, die unter Ausnutzung der Schwer- und Zentrifugalkraft eine Abtrennung der mineralischen Bestandteile aus dem Abwasser bewirken. Jedoch erfolgt bei diesen die Beschickung nicht zentrisch von oben und unter gleichzeitiger Ausnutzung einer Drallbewegung sowie des sog. Coanda-Effekts.

Bekanntlich ist der hydraulische Wirkungsgrad von Rundsandfängen und Sandklassierern sowie Absetzbecken in Rundbauweise an den effektiv durchflossenen Bereich und die mittleren Strömungsgeschwindigkeiten gekoppelt. In der Praxis war daher mit den konventionellen Bauwerken anstatt der geforderten 80% nur ein hydraulischer Wirkungsgrad von 50% erreichbar. Hier bedeutet die Maßnahme nach der Erfindung einen beachtlichen Schritt nach vorne.

Weiterhin ist allgemein bekannt, daß eine Rotationssymmetrie bei der Behälterdurchströmung nicht vorausgesetzt werden kann, da eine tangentiale Einlaufströmung die Wirbelachse nicht genügend stabilisiert. Im realen Strömungsfeld ist folglich das Strömungszentrum schraubenförmig verwunden, die Trennflächenlage instabil.

Die mit der Erfindung erzielten Vorteile bestehen insbesondere darin, daß durch die zentrische Beschickung von oben die Rotationssymmetrie besser genutzt wird. Ein weiterer Vorteil ist, daß die Umlenkung und Führung der drallbehafteten flüssigen Phase nach dem Austritt aus dem vertikalen Rohr an der Berandung des trompetenförmigen bzw. torusförmigen Körpers unter Ausnutzung des Coanda-Effektes erfolgt und daher exakt vorhersagbar ist. Zugleich wirkt neben der Schwerkraft auf die in der flüssigen Phase mitgeführten mineralischen Bestandteile durch die Umlenkung am torusförmigen Körper eine Zentrifugalkraft. Die Sandkörner werden daher bei der Umlenkung der flüssigen Phase zwangsweise aus ihr herausgeschleudert und sinken sofort in Richtung Boden ab.

Zweckmäßig wir der Drall so eingesetzt, daß sich Dralleffekt und Coanda-Effekt synergistisch verstärken. Unter "Coanda-Effekt" versteht man die Ablenkung eines Strahls zu einer gekrümmten Wand hin. Der Strahl wird aus seiner ursprünglichen Richtung abgelenkt und wird sich an benachbarte Körperoberflächen anlegen und auch starken Richtungsänderungen ablösungsfrei folgen. Das Anlegen beruht auf einer Unterdruckwirkung im Bereich des wandseitigen Strahlrandes.

Eine äußerlich ähnliche Konstruktion ist bekanntgeworden durch die DE PS 159738 vom 15.5. 1940. Dort erfolgt der Zulauf zwar ebenfalls über eine Drallkammer in ein Fallrohr, die Bewegung wird in eine drehende Bewegung umgesetzt, allerdings dient die Drehbewegung nach der DE 159738 dazu, im Fallrohr Zentrifugalkräfte auszulösen, damit sich die schwereren Teilchen nach außen lagern. Die Konstruktion besteht aus einem in einen Abscheidebehälter eintauchenden Fallrohr, das über der Ausmündung (Düse) seitliche Öffnungen aufweist und der Düsenteil ist glockenartig aufgewölbt, die Öffnungen sind also seitlich als Zwangskanäle geführt. Nach Erreichung der oberen seitlichen Ringöffnung werden die schwereren Teilchen zwischen dem düsenförmig erweiterten Fallrohr dann in horizontale Richtung in den Abscheidebehälter gestreut, während die leichteren Teilchen durch das Innere der Düse unterhalb der schwersten Teilchen zur Ausstreuung gelangen. Angeblich sollen die schweren Teilchen als Filter für die leichteren dienen. Die Düse lenkt den Flüssigkeitsstrahl also zwangsweise um.

Nicht so dagegen bei der Vorrichtung gemäß Erfindung, wo einmal an der Berandung des trompetenförmigen Körpers der Coanda-Effekt zwangsweise hervorgerufen wird und neben der Schwerkraft auf die in der flüssigen Phase mitgeführten Bestandteile durch die Umlenkung eine Zentrifugalkraft wirkt. Die Sandkörner werden daher bei der Umlenkung der flüssigen Phase zwangsweise aus ihr herausgeschleudert und sinken sofort ab. Im übrigen wird dann bei der vorliegenden Erfindung auf spezielle Körper wie eigene Düsenkörper oder dergleichen verzichtet.

Andererseits wird nicht verkannt, daß es auf dem Fachgebiet, allerdings in einer anderen Stufe des Reinigungsprozesses und zu einem anderen Zweck bereits bekannt ist, den Coanda-Effekt heranzuziehen (DE GM 9112947).

Erhebliche Vorteile gemäß der Erfindung stellen sich selbstverständlich auch dann ein, wenn ein Leitrohr nicht benutzt wird.

Wird ein solches zentrisches Leitrohr benutzt, das von der Drallkammeroberseite bis kurz oberhalb des Wasserspiegels im Fallrohr (Behälterwasserspiegel) reicht, dann läßt sich mit Erfolg die Wirbelachse zusätzlich stabilisieren. Wenn zusätzlich über den Umfang die Umfangsfläche gleichmäßig mit Löchern entsprechender Größe beim Leitrohr versehen ist, so lassen sich die Größe der Luftblasen und der Lufteintritt beeinflußen.

In Weiterbildung der Erfindung kann die Wirbelachsenstabilisierung sich ergeben, wenn das Leitrohr entsprechend der Form einer Wirbelsenke ausgebildet ist.

Bringt man zudem eine vorgezogene Tauchwand in einem bestimmten Abstand gegenüber der Behälterberandung an, so können vorteilhafterweise Schwimmstoffe und Fette zurückgehalten werden. Aufgrund der Kreisbewegung der Behälterströmung kann durch geschickte Anbringung einer zusätzlich zum Zentrum hin gerichteten spiralförmig verlaufenden inneren Tauchwand ein punktförmiger Abzug der Schwimmstoffe und Fette erreicht werden.

Eine weitere Ausbildung der Erfindung besteht darin, die vorgezogene Tauchwand bis zum Behälterdeckel zu führen und mit diesem starr zu verbinden. Bei gefülltem Abscheider bildet sich dadurch immer innerhalb der vorgezogenen Tauchwand unter dem Behälterdeckel ein Luftpolster, in dem die Schwimm- und Fettstoffe kreisen. Die Unterseite bleibt stets trocken, unangenehme Geruchsbelästigungen aufgrund von faulendem Fett werden so vermieden.

Gegenstand der Erfindung ist auch ein Verfahren der zentrischen Beschickung von Becken, wie Rundsandfängen sowie Sandklassierern und Absetzbecken in Rundbauweise, mittels eines vertikalen Fallrohres, wobei an das Fallrohr sich nahtlos eine trompetenförmige Aufweitung anschließt, wobei ein Drall zur Aktivierung des sog. Coanda-Effekts erzeugt wird, und der Coanda-Effekt so eingesetzt wird, daß er seinerseits zur Trennung der in der flüssigen Phase mitgeführten mineralischen Bestandteile und zur verzögerten drallbehafteten gleichförmigen Einleitung in das Rundbecken herangezogen wird, dadurch gekennzeichnet, daß in der Mitte des durch die tangentiale Einleitung entstehenden Wirbelkerns für eine Luftansaugung gesorgt wird, und daß auf eine im Fallrohr oder in der trompetenförmigen Aufweitung eingesetzte Steuerscheibe verzichtet wird.

Vorzugsweise wird der Drall so eingesetzt, daß sich Dralleffekt und Coanda-Effekt synergistisch verstärken.

Anwendbar ist eine solche Vorrichtung bzw. ein solches Verfahren auf das Klären von Abwässern, allgemein auf die Flüssig-Flüssig-Trennung, die Fest-Flüssig-Trennung, beispielsweise als Fettfang oder zur Trennung von geshreddertem Müll und Schmutzwasser oder als Leichtflüssigkeitsabscheider. Meist wird die Vorrichtung nach der Erfindung in den als erste beschriebenen Ausführungsformen zur Trennung der in der flüssigen Phase mitgeführten mineralischen Bestandteile und zur verzögerten drallbehafteten gleichförmigen Einleitung in das Rundbecken herangezogen.

Demgegenüber war es bisher oft notwendig, damit die organischen Bestandteile im Wasser sich nicht im Rundsandfang absetzten, eine Belüftung anzuordnen, was jedoch mit großen Kosten verbunden war.

Bei einer vorzugsweisen Anbringung einer Lufteintrittsöffnung an der Oberseite der Drallkammer gemäß der Erfindung dagegen, kann man auf einen Luftkompressor verzichten, da in diesem Bereich Luft aufgrund eines Unterdrucks in den Flüssigkeitsstrom gelangt. Konventionelle Becken von 4,5 m³ Fassungsvermögen brachten keine größere Leistung als das spezielle Rundbecken nach der Erfindung mit 0,9 m³ Fassungsvermögen. Die Leistung war in beiden Fällen gleich. Die mit bekannten Vorrichtungen nur mit großen Schwierigkeiten erreichbaren Korngrößen von weniger als 0,2 mm stehen den erfindungsgemäß ohne weiteres erreichbaren 0.125 mm gegenüber. Die zur Beschickung von Rundbecken durch Abwasser vom Anmelder bereits vorgeschlagenen Vorrichtungen (nachveröffentlichte DE-A-4 134 388) arbeiteten mit einer eingesetzten, horizontalen, kreisrunden Steuerscheibe, auf die jetzt ganz verzichtet werden kann.

Mit der oben erwähnten vorgezogenen Trenntauchwand unter einem bestimmten Abstand gegenüber der Behälterberandung ergibt sich eine besonders günstige Trennung bei Freispiegelabzug.

Wenn die vorgezogene Trennwand bis zum Behälterdeckel reicht und mit diesem starr und dicht verbunden ist, dann wird sich bei gefülltem Abscheider dadurch innerhalb der vorgezogenen Tauchwand unter dem Behälterdeckel ein Luftpolster bilden, in dem die Schwimm- und Fettstoffe kreisen.

In Weiterbildung der Erfindung kann die Behälterwand als solche bis zum Deckel hochgezogen sein, wodurch die Notwendigkeit für eine eigene vorgezogene Tauchwand entfällt. Umlaufende Schlitze in der Behälterwand ermöglichen einen Druckabzug der Flüssigkeit zu einem den Behälter umgebenden mit den Schlitzen verbundenen Gürtelrohr.

Der Schwimmstoffe aufweisende und Luft in zunehmendem Kompressionszustand enthaltende Raum oberhalb des Flüssigkeitsspiegels ist über ein diskontinuierlich öffnendes Abzugsrohr entleerbar. Wird etwa jede Stunde das Rohr plötzlich geöffnet, so schießt der Inhalt (das Gas bzw. die Luft und der sich in der Schwimmschicht abgesetzte Schlamm) durch das Rohr nach außen. Pumpen oder dergleichen sind nicht erforderlich, was einen weiteren großen Vorteil der Erfindung bedeutet.

Die Erfindung mit oder ohne Leitrohr ist anwendbar bei Becken der genannten Art auf die Flüssig-Flüssig-Trennung, die Trennung von Fest-Flüssig beispielsweise als Fettfang oder die Trennung von geshreddertem Müll und Schmutzwasser oder als Leichtflüssigkeitsabscheider. Der Durchmesser der Öffnungen des Leitrohrs kann maximal gleich d/2 (Leitrohr) sein. Die Regulierung des Lufteintritts am Leitrohr kann über Kugelhahn, Drosselklappe, die auch selbstregulierend sein kann, oder irgendein geeignetes Organ erfolgen.

Beispielsweise Ausführungsformen der Erfindung sollen nun mit Bezug auf die beiliegenden Zeichnungen näher erläutert werden, in denen
Fig. 1 eine schematische Ansicht einer ersten Ausführungsform, die hauptsächlich als Sandklassierer dient, zeigt;
Fig. 2 ist eine Draufsicht zu Fig. 1 und
Fig. 3 eine Variante zu der in Fig. 1 gezeigten Ausführungsform mit Anordnung eines Leitrohrs;
Fig. 4 eine Variante zu Fig. 3 mit anders ausgebildetem Leitrohr;
Fig. 5 eine Ausführungsform mit Tauchwand;
Fig. 6 eine Draufsicht zu Fig. 5;
Fig. 7 eine Variante, insbesondere für mit Schwimmfett und anderen Bestandteilen beladene Flüssigkeiten;
Fig. 8 eine Vereinfachungsvariante zu Fig. 7 zeigt.

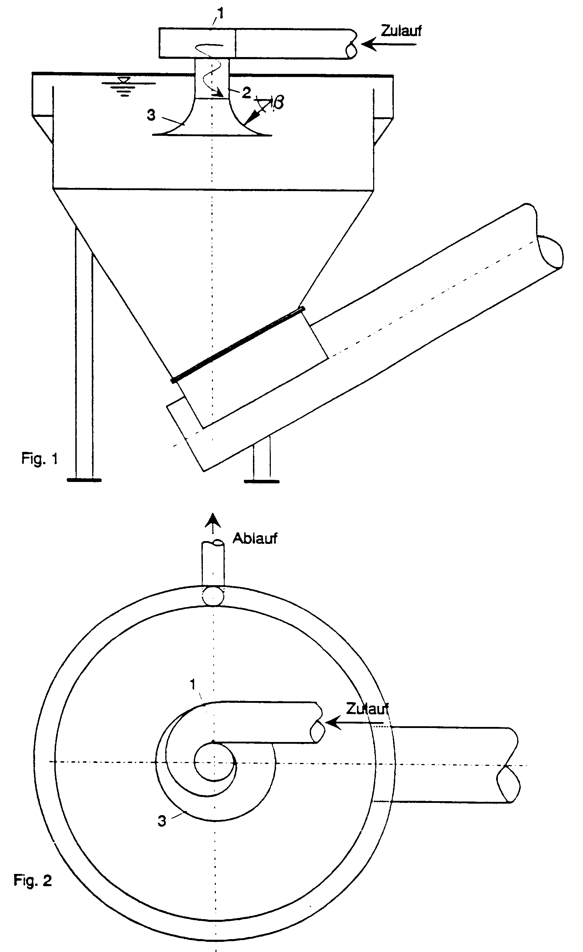

Die in den Fig. 1 und 2 dargestellte Ausführungsform zeigt ein Rundbecken 9 mit einer zentrischen Beschickung. Ein horizontaler Zulauf ist übergangslos mit einer Drallkammer 1 verbunden. An die Drallkammer 1 ist ein vertikales Rohr 2 angesetzt, das übergangslos in eine trompetenartige Aufweitung 3 (beide in der vertikalen Achse des Gesamtbildes) übergeht. Unten am Rundbecken 9 an einer trichterartigen Verengung befindet sich eine an sich bekannte Klassierschnecke 6. Das Rundbecken ist mit einem Ablauf 8 versehen. Die spiralartige Ausbildung des Zulaufs ist durch Fig. 2 verdeutlicht.

Erfindungsgemäß fließt das Abwasser horizontal der Drallkammer 1 zu. In der Drallkammer erfährt der Flüssigkeitsstrom einen Drall, woraufhin er das vertikale Rohr 2 in schraubenförmiger Bewegung durchfließt. Am Ende des vertikalen Rohres 2 verstärkt der Drall den Fluß durch die trompetenförmige Aufwölbung und verstärkt so synergistisch das Anlegen des Strahls an die trompetenartige Innenkrümmung und damit die Umlenkung nach unten, in einer radialen Richtung und sogar nach oben. Schließlich fließt der drallbehaftete Flüssigkeitsstrahl nach Umlenkung in das Rundbecken ein.

Ein solcher Sandklassierer kann mit einem Rundbecken von beispielsweise 1,5 m Durchmesser, bei einer Höhe von nicht mehr als 1,6 m Durchmesser und einem Fassungsvermögen des Rundbeckens von 1,5 m³ arbeiten.

Es wird also das ganze Becken aktiviert durch:
- Fliehkraft, hervorgerufen durch die Drallkammer auf das Abwasser wirkend und eine Spiralbewegung erzeugend,
- Fliehkraft, infolge Umlenkung an der Coanda-Trompete (Teilchen werden abgeschleudert), sowie
- Fliehkraft durch Drallströmung im Becken

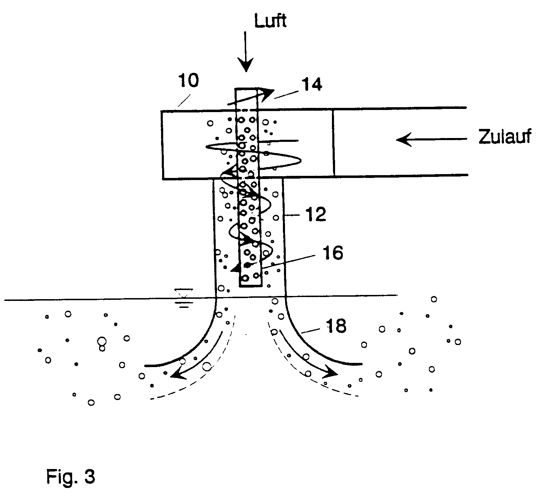

Nach Fig. 3 folgt der Zulauf in eine Drallkammer 10. Aus der Drallkammer 10 tritt Flüssigkeit in ein Fallrohr, das eine trompetenförmige Aufweitung 18 aufweist.

In das Fallrohr hineinreichend ist ein Leitrohr 14 vorgesehen, und zwar mittig im Fallrohr. Das Leitrohr ist oben offen, hat aber eine Luftregulierung. Das Leitrohr trägt über seinen Umfang Öffnungen, die den Bedürfnissen angepaßt werden können. Luft wird in Form von Blasen vom vorbeifließenden Flüssigkeitsstrom in das Rundbecken befördert, da sich in der Achse des Fallrohrs ein Wirbelkern zwangsweise einstellt, der sonst außermittig kreist. Mit zunehmender Zentrifugalbeschleunigung werden mehr Öffnungen freigelegt. Man erkennt gut, wie sich der Flüssigkeitsstrom an der Coanda-Tulpe anlegt, und so werden die Sandkörner bei der Umlenkung der flüssigen Phase zwangsweise aus ihr herausgeschleudert und sinken sofort ab.

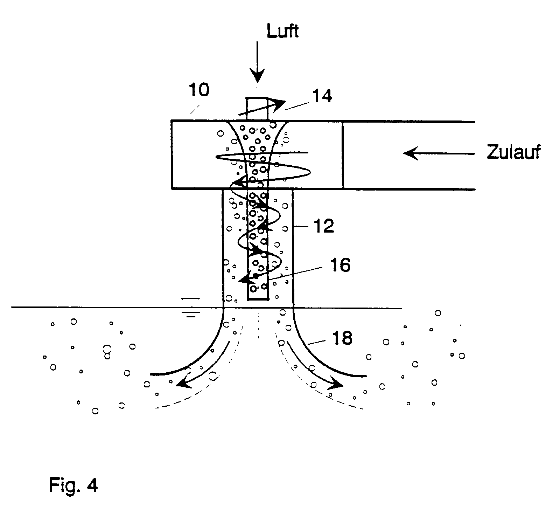

Fig. 4 zeigt eine Ausführungsform ähnlich der Fig. 3. Hier ist ebenfalls ein Leitrohr 16 im Fallrohr 12 vorgesehen, ebenfalls wieder mit Öffnungen über den Umfang, das allerdings nach Art einer Wirbelsenke ausgebildet ist, d.h., oben eine große Trompetenöffnung, die sich nach unten in das Fallrohr hinein in das Rohr fortsetzt, aufweist.

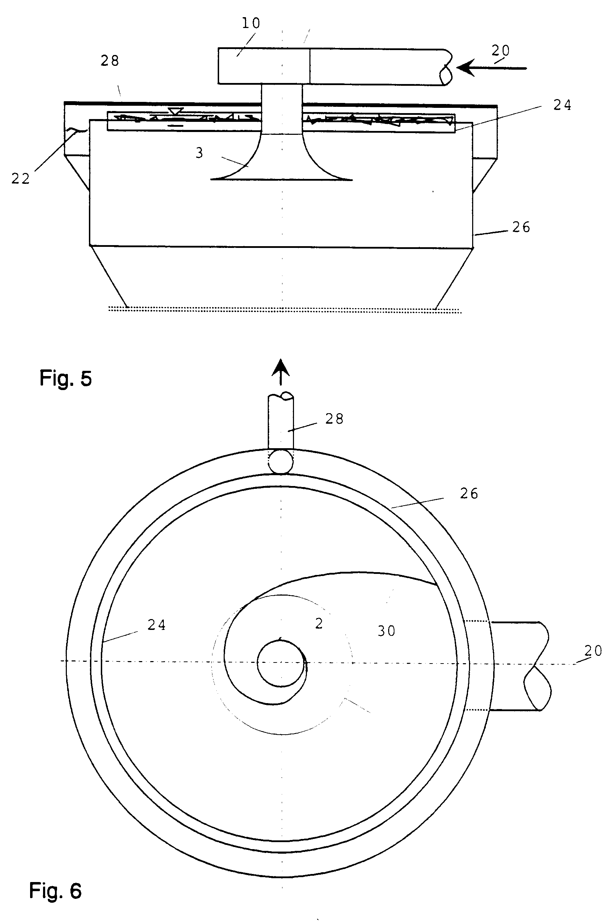

Fig. 5 und 6 zeigen eine andere Ausführungsform, die besonders für die Fettabscheidung oder die Abscheidung sonstiger infolge Luftanlagerung oder Flockungsmittel schwimmender Teilchen geeignet ist. Die Höhe der Tauchwand 24 beträgt beispielsweise 15 cm, wobei lagemäßig 3 cm in den Behälterwasserspiegel eintauchen und z.B. 12 cm hinausstehen (ein Drittel tauchen ein, drei Viertel stehen hinaus). Die gesamte freie Spiegelfläche innerhalb der Tauchwand 24 dient somit als Schwimm- und Feststoffalle. Bezugszeichen, die die gleiche Bedeutung wie in den übrigen Figuren haben, haben gleiche Kennung. Man sieht, wie die Schwimmstoffe sich innerhalb der vorgezogenen Tauchwand 24 anlagern, man sieht den Freispiegelabzug mit einem bestimmten Abstand bei 22. Diese Ausführungsform arbeitet ohne Leitrohr.

In der Draufsicht der Fig. 6 zur Fig. 5 ist eine weitere Ergänzung der Schwimm- und Fettstoffalle vorgesehen. Von der vorgezogenen Tauchwand 24 weg führt eine zum Zentrum hin gerichtete spiralförmig verlaufende innere Tauchwand 30. Die Höhe der inneren Tauchwand ist gleich der Höhe der erstgenannten vorgezogenen Tauchwand und beträgt z.B. ebenfalls 15 cm. Der Ablauf ist bei 28 angedeutet, die Behälterberandung bei 26. Die Schlammteilchen werden also zur Mitte wandern und in der Schwebe nach oben transportiert. Durch das Ausperlen der Luft aus dem Gemisch bildet sich oberhalb des Flüssigkeitsspiegels bei 28 die aus Fettbestandteilen bestehende Schwimmdecke und darüber eine Hauptkammer, die den Behälterdeckel innen trocken hält.

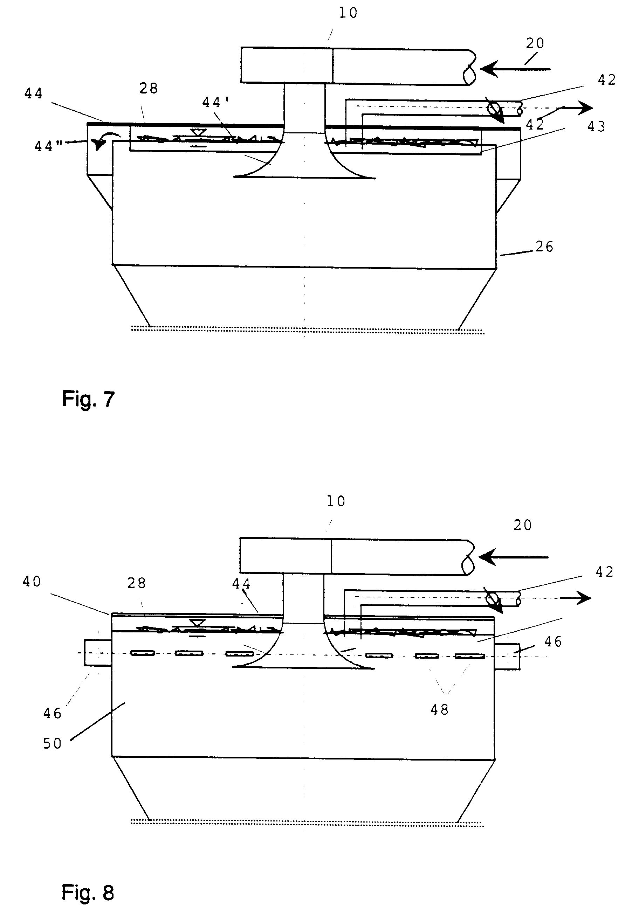

Eine weitere Ausführungsform zeigt Fig. 7. Hier ist eine vorgezogene Tauchwand 43 im Behälter 26 genauso wie die innere Tauchwand bis an den Behälterdeckel 44 geführt und mit diesem verschweißt. Dadurch bildet sich unter dem Behälterdeckel ein Luftpolster, in dem die Schwimm- und Fettstoffe 44' kreisen. Die Luft wird bei 40 zunehmend komprimiert; der Freispiegelabzug 44'' ist bei 42 wieder zusehen. Die Coanda-Trompete 3 und die Drallkammer 10 sind wie bei den vorhergehenden Ausführungsformen, der Zulauf ist bei 20 angedeutet. Über das mit Absperrmitteln versehene Rohr 42 können Schlamm-Schwimmstoffe 44' zusammen mit Luft diskontinuierlich aufgrund des Überdrucks abgezogen bzw. ausgestoßen bzw. herausgeschossen werden. Dies kann z.B. alle Stunden erfolgen.

Eine weitere Ausführungsform zeigt Fig. 8, die gegenüber Fig. 7 vereinfacht ist. Die Behälterwand 50 ist einfach an den Deckel hochgezogen und mit diesem Deckel 44 verschweißt. Der Zulauf 20, Drallkammer 10, die Coanda-Trompete 3 sind unverändert. Schwimmfettstoffe sammeln sich bei 44', bei 40 wächst ein Luftpolster unter ansteigendem Druck an und der Abzug erfolgt wieder über das Rohr 42 für den Abzug von Schwimm- und Fettstoffen 28. Der Flüssigkeitsabzug erfolgt über Schlitze 48, die in eine Druckabzugsleitung austragen. Diese ist als um den Behälter 50 herumlaufendes Gürtelrohr ausgebildet. Es erfolgt also ein Abzug unter Druck, d.h. es handelt sich um ein tatsächlich geschlossenes System. Es fällt auf, daß keinerlei Pumpen eingesetzt werden. Die äußere Tauchwand ist bei diesem Beispiel fortgefallen. Nur die innere Tauchwand ist vorhanden, wenn dies so ausgedrückt werden darf.

Die Maßnahme nach der Erfindung läßt sich also durchführen
a) ohne Leitrohr (siehe die o.g. Vorteile vor allen Dingen für die ersten Ausführungsformen)
b) mit geschlossenem Leitrohr. Hier dient das Leitrohr vor allen Dingen dazu, den Wirbelkern zu stabilisieren, der sich um das Leitrohr wickelt. Diese Ausführungsform wurde nicht besonders gezeichnet und
c) mit Leitrohr, das oben und unten offen ist und über den Umfang mit Löchern versehen ist, wobei als Variante die Löcher entsprechend den strömungstechnischen Bedingungen im Durchmesser zunehmen.

Nach einer weiteren Ausbildung der Maßnahme nach der Erfindung kann der Lufteintritt auch über eine Zwangszuführung erfolgen. Die Zwangszuführung kann beispielsweise in einem Kompressor bestehen. Hierdurch lassen sich besondere Effekte der Luftanlagerung erreichen.

Der Luftansaugung können vorzugsweise auch von oben Flockungsmittel beigegeben werden, wenn dies der Betreiber der Anlage für erforderlich hält. Gegebenenfalls können auch der Zwangszuführung Flockungsmittel beigegeben werden.

## Patentansprüche

1. Vorrichtung zur zentrischen Beschickung von Becken, wie Rundsandbecken sowie Sandklassierern und Absetzbecken in Rundbauweise, mit einer mit dem Zulauf verbundenen Drallkammer, die mit einem vertikalen Fallrohr in Verbindung steht, wobei an das Fallrohr sich nahtlos eine trompetenförmige Aufweitung anschließt, wobei die Drallströmung derart ausgenutzt wird, daß an der trompetenförmigen Aufweitung (3) der Coanda-Effekt aktiviert wird, welcher seinerseits eine Umlenkung des aus dem vertikalen Fallrohr (2) austretenden drallbehafteten Flüssigkeitsstroms zumindest in die Horizontale oder vertikal nach oben als auch eine radial symmetrische Abströmung im Becken bewirkt, dadurch gekennzeichnet, daß auf eine im Fallrohr (2) oder in der trompetenförmigen Aufweitung (3) eingesetzte Steuerscheibe verzichtet wird und daß insbesondere ein mittig im Fallrohr (10) über seinen Rohrumfang vorzugsweise runde Öffnungen aufweisendes Leitrohr (16) angeordnet ist, das oben zur Atmosphäre hin offen ist.

2. Vorrichtung nach Anspruch 1, dadurch gekennzeichnet, daß der Lufteintritt des Leitrohrs (16) regulierbar ausgebildet ist.

3. Vorrichtung nach Anspruch 2, dadurch gekennzeichnet, daß der Lufteintritt über eine Zwangsführung erfolgt.

4. Vorrichtung nach einem der vorhergehenden Ansprüche, dadurch gekennzeichnet, daß der Umlenkwinkel des trompetenförmigen bzw. torusähnlichen Körpers (3) veränderbar ausgebildet ist.

5. Vorrichtung nach einem der vorhergehenden Ansprüche, dadurch gekennzeichnet, daß das Leitrohr (16) entsprechend einer Wirbelsenke ausgestaltet und über die Umfangsflächen gleichmäßig verteilt mit Löchern entsprechender Größe versehen ist.

6. Vorrichtung nach Anspruch 4, dadurch gekennzeichnet, daß die Einhängelage der trompetenförmigen Aufweitung (18) veränderbar ist.

7. Vorrichtung nach Anspruch 1, insbesondere zur Begünstigung einer Trennung durch Flotation einschließlich Flüssig-Flüssig-Trennung, beispielsweise Fettabscheidung, dadurch gekennzeichnet, daß eine vorgezogene Tauchwand (24) in einem bestimmten Abstand gegenüber der Behälterberandung (26) vorgesehen ist.

8. Vorrichtung nach Anspruch 7, dadurch gekennzeichnet, daß innerhalb der vorgezogenen Tauchwand (24) eine zum Zentrum hin spiralförmig verlaufende innere Tauchwand (30) angeordnet ist.

9. Vorrichtung nach einem der Ansprüche 7 und 8, dadurch gekennzeichnet, daß die vorgezogene Tauchwand (43) bis zum Behälterdeckel (44) reicht und mit ihm starr verbunden ist; und ein Freispiegelabzug (42) vorgesehen ist.

10. Vorrichtung nach einem der Ansprüche 7 bis 9, dadurch gekennzeichnet, daß die Behälterwand (50) bis zum Deckel (44) hochgezogen ist, mit diesem dicht verbunden ist, und über umlaufende Schlitze (48) in der Behälterwand ein Druckabzug der Flüssigkeit zu einem den Behälter umgebenden Gürtelrohr (46) vorg gesehen ist.

11. Vorrichtung nach Anspruch 10, dadurch gekennzeichnet, daß der Schwimmstoffe und Luft in zunehmend komprimiertem Zustand enthaltende Raum (40) oberhalb des Flüssigkeitsspiegels über ein diskontinuierlich öffnendes Abzugsrohr (42) entleerbar ist.

12. Verfahren zur zentrischen Beschickung von Becken, wie Rundsandfängen sowie Sandklassierern und Absetzbecken in Rundbauweise, mittels eines vertikalen Fallrohres, wobei an das Fallrohr sich nahtlos eine Trompetenförmige Aufweitung anschließt, wobei ein Drall zur Aktivierung des sog. Coanda-Effekts erzeugt wird, wobei der Coanda-Effekt so eingesetzt wird, daß er einerseits zur Trennung der in der flüssigen Phase mitgeführten mineralischen Bestandteile und zur verzögerten drallbehafteten, gleichförmigen Einleitung in das Rundbecken herangezogen wird, dadurch gekennzeichnet, daß in der Mitte des durch die tangentiale Einleitung entstehenden Wirbelkerns für eine Luftansaugung gesorgt wird, und daß auf eine im Fallrohr oder in der trompetenförmigen Aufweitung eingesetzte Steuerscheibe verzichtet wird.

13. Verfahrens des Anspruchs 12, dadurch gekennzeichnet, daß der Drall so eingesetzt wird, daß sich Dralleffekt und Coanda-Effekt synergistisch verstärken.

14. Verfahren nach einem der Ansprüche 12 oder 13, dadurch gekennzeichnet, daß der Luftansaugung von oben Flockungsmittel beigegeben werden.

15. Anwendung der Vorrichtung nach einem der Ansprüche 1-11 zur zentrischen Beschickung von Becken wie Absetzbecken, Rundsandfängen, Flotationsbecken und Sandklassierern in Rundbauweise auf die Flüssig-Flüssig-Trennung, die Trennung von Fest-Flüssig, beispielsweise als Fettfang oder die Trennung von geshreddertem Müll und Schmutzwasser oder als Leichtflüssigkeitsabscheider.

## Claims

1. A device for the central feeding of tanks such as circular grit tanks and grit classifiers and settling tanks of circular construction having a swirl chamber which is connected to the inflow and is in connection with the vertical gravity outlet pipe, a trumpet-shaped widening adjoining the gravitiy outlet pipe in a seamless manner, wherein rotary flow having angular momentum is utilized for feeding such that there is activated, at the trumpet-shaped widening (3), the Coanda effect which, for its part, causes a deflection of the liquid stream, emerging from the downpipe (2) and having angular momentum, at least in the horizontal direction or vertically upwards and also causes a radially symmetrical drain-off in the tank, characterized in that a control disk placed into the downpipe (2) or into the trumpet-shaped widening (3) is renounced upon and that there is arranged, in particular, a conduit pipe (16), centrally in the gravity outlet pipe (10), which has preferably circular openings over its circumference and is open at the top towards the atmosphere.

2. The device as claimed in claim 1, wherein the supply of air of the conduit pipe (16) is designed such that it can be regulated.

3. The device as claimed in claim 2, wherein the supply of air takes place via a compulsory feed means.

4. The apparatus as claimed in one of the preceding claims, wherein the deflection angle of the trumpet-shaped or toroidal body (3) is designed such that it can be changed.

5. The apparatus as claimes in one of the preceding claims, wherein the conduit pipe (16) is configured in a manner coresponding to a vortex sink and is provided with holes of corresponding size, distributed uniformly over the circumferential surfaces.

6. The device as claimed in claim 4, wherein the position at which the trumpet-shaped widening (18) is suspended can be changed.

7. The device as claimed in claim 1, in particular for promoting a separation by flotation including liquid/liquid separation, for example grease separation, wherein an upstream immersed baffle (24) is provided at a defined distance from the tank edge (26).

8. The device as claimed in claim 7, wherein an inner immersed baffle (30) running helically towards the center is arranged within the upstream immersed baffle (24).

9. The device as claimed in one of claims 7 and 8, wherein the upstream immersed baffle (43) reaches as far as the tank cover (44) and is connected rigidly thereto; and an open top gravity discharge (42) is provided.

10. The device as claimed in one of claims 7 to 9, wherein the tank wall (50) is taken as far as the cover (44), is connected thereto in a sealed manner and, via peripheral slots (48) in the tank wall, a pressure discharge of the liquid to a pipe (46) encircling the tank is provided.

11. The device as claimed in claim 10, wherein the space (40) containing floating substances and air in an increasingly compressed state and located above the liquid level can be emptied via a discharge pipe (42) which opens discontinuously.

12. A process for central feeding tanks such as circular grit traps, and grit classifiers and settling tanks of circular construction by means of a vertical downpipe, a trumpet-shaped widening adjoining the gravity outlet pipe in a seamless manner, wherein a swirl is produced in order to activate the so-called Coanda effect, the Coanda effect being utilized such that it serves on the one hand for separation of the mineral constitutents entrained in the liquid phase and for the decelerated and uniform introduction, having angular momentum, into the circular tank, characterized in that an air intake is provided in the center of the vortex core arising as a result of the tangential introduction, and that a control disk to be placed into the downpipe or into the trumped-shaped widening is renounced upon.

13. The process as claimed in claim 12, wherein the swirl is utilized such that swirl effect and Coanda effect are intensified synergistically.

14. The process as claimed in one of claims 12 or 13, wherein flocculating agents are added to the air intake from the top.

15. Use of the device according to one of claims 1-11 for the central feeding of tanks such as settling tanks, circular grit traps, flotation tanks and grit classifiers of circular construction for liquid/liquid separation, the separation of solids and liquids, for example as grease trap, or the separation of shredded refuse and sewage, or as petrol separator.

## Revendications

1. Dispositif pour le chargement central de bassins, tels que des bassins circulaires à sable ainsi que des dispositifs de classification à sable et des bassins de décantation de construction circulaire, comportant une chambre à tourbillonnement, reliée à la canalisation d'arrivée et qui est en communication avec un tube vertical de descente et dans lequel une partie élargie en forme de trompette se raccorde sans joint au tube de descente, l'écoulement tourbillonnaire étant utilisé de telle sorte que l'effet Coanda est activé au niveau de la partie élargie en forme de trompette (3), effet qui pour sa part provoque une déviation de l'écoulement liquide, qui est en tourbillonnement, et sort du tube vertical de descente (2), au moins suivant l'horizontale ou verticalement vers le haut, ainsi qu'un écoulement sortant symétrique radialement, dans le bassin, caractérisé en ce qu'on n'utilise aucun disque de commande inséré dans le tube de descente (2) ou dans la partie élargie en forme de trompette (3), et qu'en particulier il est prévu un tube de guidage (16), qui possède, en position centrée dans le tube de descente (10), des ouvertures de préférence circulaires réparties sur sa périphérie, et qui est ouvert vers le haut en direction de l'atmosphère.

2. Dispositif selon la revendication 1, caractérisé en ce que l'entrée d'air du tube de guidage (16) est agencée de manière à être réglable.

3. Dispositif selon la revendication 2, caractérisé en ce que l'entrée d'air s'effectue par l'intermédiaire d'un système de guidage forcé.

4. Dispositif selon l'une des revendications précédentes, caractérisé en ce que l'angle de déviation du corps en forme de trompette ou de tore (3) est agencé de manière à être variable.

5. Dispositif selon l'une des revendications précédentes, caractérisé en ce que le tube de guidage (16) est agencé conformément à un puits à tourbillons et comporte des trous de taille correspondante qui sont répartis uniformément sur les surfaces circonférentielles.

6. Dispositif selon la revendication 1, caractérisé en ce que la position suspendue de la partie élargie en forme de trompette (18) est variable.

7. Dispositif selon la revendication 1, notamment destiné à favoriser une séparation par flottation y compris une séparation liquide-liquide, par exemple une séparation des graisses, caractérisé en ce qu'une paroi d'immersion avancée (24) est prévue à une distance déterminée par rapport au bord (26) du récipient.

8. Dispositif selon la revendication 7, caractérisé en ce qu'une paroi intérieure d'immersion (30), qui s'étend avec une forme spiralée en direction du centre, est disposée à l'intérieur de la paroi d'immersion avancée (24).

9. Dispositif selon l'une des revendications 7 et 8, caractérisé en ce que la paroi d'immersion avancée (43) s'étend jusqu'au couvercle (44) du récipient et est reliée rigidement à ce dernier, et qu'il est prévu un système d'évacuation à écoulement libre (42).

10. Dispositif selon l'une des revendications 7 à 9, caractérisé en ce que la paroi (50) du récipient remonte jusqu'au couvercle (44) et est reliée de manière étanche à ce dernier, et qu'un système d'évacuation sous pression du liquide en direction d'un tube enveloppe (46) entourant le récipient est prévu sous la forme de fentes circonférentielles (48) formées dans la paroi du récipient.

11. Dispositif selon la revendication 10, caractérisé en ce que l'espace (40), qui contient des substances flottantes et de l'air dans un état de plus en plus comprimé, peut être vidé au-dessus du niveau du liquide, par l'intermédiaire d'un tube d'évacuation (42) ouvert d'une manière discontinue.

12. Procédé pour le chargement central de bassins, tels que des collecteurs circulaires à sable ainsi que des dispositifs de classification à sable et des bassins de décantation de construction circulaire, à l'aide d'un tube vertical de descente, dans lequel une partie élargie en forme de trompette se raccorde sans joint au tube de descente, selon lequel un tourbillon est produit pour déclencher ce qu'on appelle l'effet Coanda, et selon lequel l'effet Coanda est utilisé d'une part pour la séparation des composants minéraux entraînés conjointement dans la phase liquide, et pour l'introduction uniforme retardée, affectée d'un tourbillonnement, dans le bassin circulaire, caractérisé en qu'une aspiration d'air est réalisée au centre du coeur du tourbillon qui apparait sous l'effet de l'introduction tangentielle, et qu'on n'utilise aucun disque de commande installé dans le tube de chargement ou dans la partie élargie en forme de trompette.

13. Procédé selon la revendication 12, caractérisé en ce que le tourbillon est mis en oeuvre de telle sorte que l'effet de tourbillonnement et l'effet Coanda se renforcent d'une manière synergique.

14. Procédé selon l'une des revendications 12 ou 13, caractérisé en ce que des moyens de flocage sont ajoutés, à partir du haut, dans l'air aspiré.

15. Utilisation du dispositif selon l'une des revendications 1-11 pour le chargement central de bassins, tels que des bassins de décantation, des collecteurs circulaires à sable, des bassins de flottation et des dispositifs de classification à sable de construction circulaire, pour la séparation liquide-liquide, la séparation solide-liquide, par exemple en tant que système de collecte de graisse, ou la séparation d'ordures triées et d'eau sale ou en tant que séparateur de liquides usés.
